Europäisches Patentamt

European Patent Office

Office européen des brevets

(19)

(11) Numéro de publication: **0 538 184 B1**

(12) **FASCICULE DE BREVET EUROPEEN**

(45) Date de publication de fascicule du brevet: **22.02.95**  (51) Int. Cl.$^6$: **G01D 5/24**

(21) Numéro de dépôt: **92810711.9**

(22) Date de dépôt: **15.09.92**

(54) **Capteur capacitif de position.**

(30) Priorité: **15.10.91 CH 3017/91**

(43) Date de publication de la demande:
**21.04.93 Bulletin 93/16**

(45) Mention de la délivrance du brevet:
**22.02.95 Bulletin 95/08**

(84) Etats contractants désignés:
**DE FR GB IT NL**

(56) Documents cités:
**EP-A- 0 053 091**
**EP-A- 0 344 942**
**DE-A- 2 539 561**
**GB-A- 2 180 351**

**IBM TECHNICAL DISCLOSURE BULLETIN vol.
21, no. 1, Juin 1978, pages 242 - 243 DOBSON
ET AL. 'Position Encoder'**

(73) Titulaire: **Meyer, Hans Ulrich**
**42, rue de Lausanne**
**CH-1110 Morges (CH)**

(72) Inventeur: **Meyer, Hans Ulrich**
**42, rue de Lausanne**
**CH-1110 Morges (CH)**

(74) Mandataire: **ARDIN & CIE S.A.**
**Rue de Genève 122**
**Case Postale 56**
**CH-1226 Genève-Thônex (CH)**

EP 0 538 184 B1

## Description

La présente invention concerne un capteur capacitif de position comprenant un curseur et une règle séparés l'un de l'autre par une distance prédéterminée et susceptibles d'être déplacés l'un par rapport à l'autre suivant au moins une direction de mesure, le curseur comportant au moins deux électrodes émettrices et au moins une électrode réceptrice et des premiers moyens pour générer des signaux électriques appliqués sur les électrodes émettrices et des seconds moyens pour évaluer les signaux reçus par les électrodes réceptrices de façon à déterminer la position relative du curseur et de la règle.

Plusieurs réalisations de tels capteurs capacitifs de position sont connues. Certaines d'entres elles, surtout destinées à des systèmes de détermination de positions à deux coordonées, utilisés par exemple comme péripheriques d'ordinateurs, utilisant en tant que règles des réseaux de fils conducteurs noyés dans une tablette et excités par des signaux électriques, lesdits signaux étant détectés par une électrode réceptrice incorporée dans le curseur. Celui-ci peut être un "crayon" ou un pointeur, comme décrit dans le brevet US No. 3,342,935. Principalement, à cause de la complexité de ces réseaux de fils, de tels périphériques sont trop onéreux pour être compétitifs dans des applications où des pointeurs plus simples, tels des souris, suffisent.

Le document EP 0 344 942 se réfère à un dispositif capacitif destiné à la mesure de déplacements comportant un curseur avec des électrodes qui sont alimentées avec des courants RF d'une fréquence de 100 kHz à 100 MHz. Le curseur est superposé à une plaque mise à terre comportant une structure bidimensionnelle. La mesure des courants parcourant des électrodes en fonction des capacités des électrodes par rapport à la plaque permet d'évaluer la position relative du curseur par rapport à la plaque.

Le principe de mesure décrit dans ce document est complétement différent, puisque le curseur ne présente pas d'électrodes émettrices et réceptrices séparées et que la mesure n'est pas obtenue par l'évaluation des signaux émis par des électrodes émettrices et reçus par des électrodes réceptrices, toutes deux disposées sur le curseur.

D'autres réalisations de capteurs capacitifs du type défini dans le préambule de la revendication 1 et destinés avant tout à des instruments de mesure de longueurs ou d'angles, comme des pieds à coulisse, micromètres, comparateurs à cadran, codeurs rotatifs, utilisent une règle comportant un réseau d'électrodes flottantes, c'est-à-dire complètement isolées électriquement, en regard d'un curseur ayant des électrodes émettrices et réceptrices. Un tel capteur capacitif est décrit dans le brevet US No. 3,961,318.

Le document IBM Technical Disclosure Bulletin Vol 21, No. 1, Juin 1978, pages 242,243, décrit également un codeur linéaire de position comportant des électrodes émettrices et réceptrices disposées sur une première partie et des premières électrodes de transmission disposées sur une seconde partie déplaçable par rapport à la première partie. Cette seconde partie comporte encore des deuxième électrodes de transmission reliées galvaniquement aux premières électrodes de transmission. Les électrodes émettrices transmettent des signaux par couplage capacitif aux premières électrodes de transmission. Les signaux couplés sont ensuite retournés par l'intermédiaire des secondes électrodes de transmission vers les électrodes réceptrices. Selon un mode pratique d'exécution, les électrodes de transmission illustrés à la figure 3 de ce document sont obtenues par impression au moyen d une encre conductrice et le codeur pourra par exemple être utilisé pour le positionnement de circuits imprimés.

De même, le brevet US 4,841,225 décrit un principe de mesure similaire par transmission des signaux du curseur vers la règle et retour au moyen d'électrodes de transmission comportant des zones disposées les unes en regard des autres sur le curseur et la règle, la règle étant muni d'électrodes flottantes. Ces électrodes flottantes éliminent les connections électriques entre la règle et le curseur. Mais il reste des inconvenients. La règle ne peut être homogène, puisqu'il faut un substrat isolant sous les électrodes conductrices. Les couplages entre électrodes flottantes voisines, ainsi que la conductivité à la surface de la règle engendrée par l'humidité, dégradent les performances. De plus, ces électrodes flottantes s'étendent au travers de l'axe de mesure, puisqu'elles ont deux fonctions clairement séparées, l'une de couplage aux électrodes émettrices, l'autre de retransmission du signal reçu vers les électrodes réceptrices. L'étendue, en travers de l'axe de mesure, qui en résulte pour implémenter ces deux fonctions spatialement séparées empêche l'extension d'un tel système de mesure à une deuxième dimension.

La présente invention a pour but de remédier à ces inconvénients et elle est caractérisée à cet effet en ce que la règle comprend un relief périodique constitué en un matériau isolant ou conducteur d'une extrémité à l'autre de ce relief périodique et présentant des éléments topographiques en creux et en élévations arrangées suivant au moins ladite direction de mesure avec une période prédéterminée, les éléments topographiques d'une période étant indentique à ceux de la période précédente et suivante, lesdits second moyens étant agencés de façon à évaluer des signaux couplés latéralement des électrodes émettrices sur le curseur à l'électrode réceptrice sur le curseur, les éléments topographiques de la règle

2

étant conformés de façon à influencer lesdits signaux couplés latéralement sur le curseur en modifiant les capacités de couplage (Cac, Cbc) entre lesdites électrodes se trouvant toutes sur le curseur lorsque le curseur et la règle sont déplacés l'un par rapport à l'autre suivant la direction de mesure.

Par cette disposition, on peut obtenir un capteur précis, d'une fabrication simple et d'un coût de revient peu élevé. L'invention permet une extension aisée à des mesures à deux dimensions.

De préférence, le curseur comporte au moins une série d'électrodes arrangées suivant cette direction de mesure et des moyens de commutation permettant de relier les électrodes à au moins deux signaux électriques suivant un arrangement périodique.

Ces caractéristiques permettent d'obtenir une capteur avec une électronique simple, précise et peu coûteuse.

Selon un mode avantageux, la règle comprend au moins une rangée d'éléments topographiques de façon à présenter un relief périodique ayant une période de long d'au moins une direction de mesure, le curseur comportant au moins une rangée d'électrodes disposées le long de cette direction, les moyens de commutation étant agencés de façon à relier suivant une distribution prédéterminée chaque électrode de cette rangée à l'un des signaux alternatifs, a l'une des entrées d'un amplificateur, ou à un potentiel de masse de manière à obtenir une distribution de signaux correspondant à la période dudit relief périodique ou à un multiple de cette période, ces moyens de commutation pemettant de déplacer ladite distribution le long de la rangée d'électrodes.

Cette construction assure des règles d'un faible encombrement susceptible de trouver des applications dans de très nombreux domaines de mesure et permet d'avoir un curseur présentant un réseau d'électrodes uniforme donc de fabrication aisée et d'une largeur minimale.

Selon un mode d'exécution préféré, le curseur comprend deux rangées d'électrodes émettrices identiques alignées suivant une direction de mesure et des électrodes réceptrices disposées parallèlement à chacune desdites rangées d'électrodes émettrices, les moyens de commutation étant agencés de façon à appliqer aux électrodes émettrices des deux rangées des distributions de signaux pareilles l'une à l'autre mais avec des polarités opposées, ces moyens de commutation permettant de déplacer les distributions de signaux le long des rangées, chacune des électrodes réceptrices étant connectée à une entrée d'un amplificateur différentiel.

Ce mode permet d'obtenir un capteur présentant un circuit de commutation simple et qui permet un arrangement des électrodes réceptrices, des seconds moyens pour évaluer les signaux reçus et de leurs interconnections facile à isoler de couplages néfastes. La sensibilité de mesure est donc grandement améliorée par cette disposition des électrodes du curseur. Par contre, la sensibilité aux influences néfastes est fortement réduite.

D'autres avantages ressortent des caractéristiques exprimées dans les renvendications dépendantes et de la description exposant ci-après l'invention plus en détail à l'aide des dessins qui représentent, schématiquement et à titre d'exemple, plusieurs modes d'exécution et variantes.

La figure 1 illustre un premier mode d'exécution de l'invention.

La figure 2a est une vue en coupe partielle de ce premier mode d'exécution.

La figure 2b montre la capacité différentielle de ce mode d'exécution en fonction du décalage x entre le curseur et la règle.

La figure 3a représente un mode d'exécution annulaire.

La figure 3b montre la capacité différentielle de ce mode d'exécution en fonction du décalage entre le curseur et la règle.

La figure 4 représente l'arrangement des électrodes du curseur d'un troisième mode d'exécution et en superposition le contour d'un élément topographique de la règle.

Les figures 5 et 6 sont des vues en perspective d'un quatrième et cinquième mode d'exécution.

La figure 7a illustre en perspective un circuit intégré servant de curseur.

La figure 7b est une vue en coupe d'un circuit intégré servant de curseur et maintenu sur un porteur par ses connections.

La figure 7c montre en perpective un curseur dont le plan des électrodes est orthogonal à celui du relief de la règle.

La figure 8a montre une règle linéaire en relief recouverte d'un diélectrique.

La figure 8b représente une règle linéaire consistant en une crémaillère cylindrique.

La figure 8c montre une règle circonférentielle sur le pourtour d'un pignon.

La figure 8d montre une règle circonférentielle étampée ou gravée dans une plaque mince.

La figure 8e montre une règle linéaire et/ou circonférentielle consistant en un vis micrométrique en vue latérale et coupe.

La figure 9a représente une règle bi-dimensionnelle dont le relief consiste en deux réseaux de rainures orthogonales.

La figure 9b illustre une règle bi-dimensionnelle consistant en une plaque diélectrique munie d'un relief sur la face opposée aux curseurs.

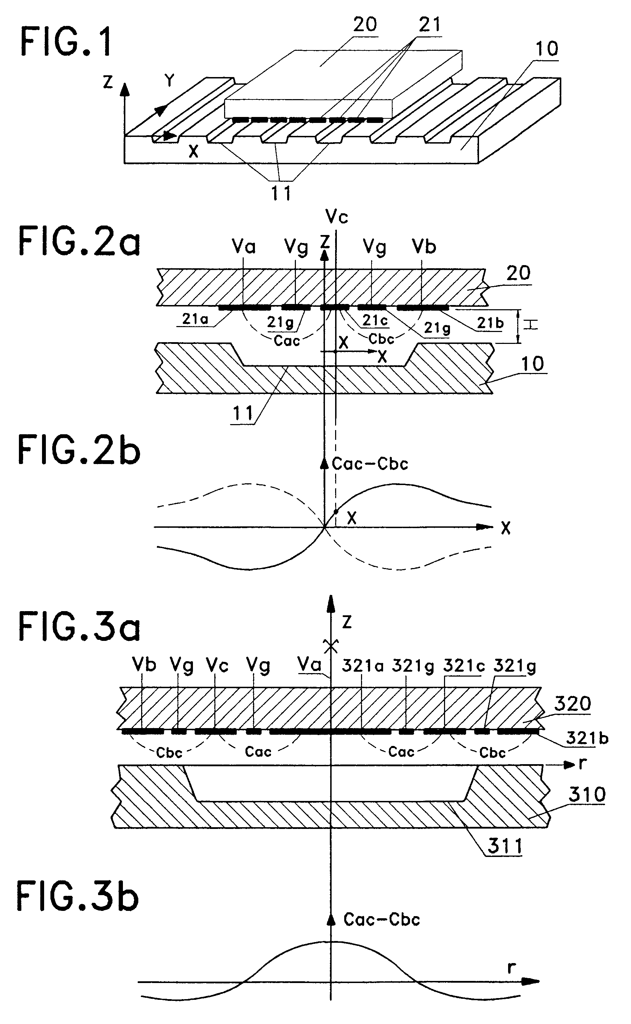

Un capteur typique conforme à l'invention est esquissé à la figure 1. Il comporte une règle 10 présentant un élément topographique 11 en creux formant un relief et un curseur 20 ayant des électrodes 21. L'écart H entre la règle et le curseur reste constant lors de déplacements entre eux. Pour plus de clarté, un référentiel xyz est montré : x et y définissent le plan localement tangent au relief 11 de la règle 10, z lui étant perpendiculaire. La figure 1 montre un relief périodique 11 de la règle 10 le long de l'axe x, et un réseau périodique d'électrodes 21 s'étendant également dans la direction de x du curseur 20. Par conséquent, le relief 11 va influencer les capacités entre les électrodes 21 en fonction de la position X du curseur 11 le long de l'axe X. Bien entendu d'autres paramètres comme l'écart H entre la règle 10 et le curseur 20, le matériel de la règle 10 et la forme du relief 11, influencent aussi ces capacités entre électrodes. Il faut donc choisir les configurations d'électrodes et les méthodes de mesure qui minimisent l'influence de ces autres paramètres.

Conformément à l'invention, ceci est fait en combinant les électrodes 21 du curseur 20 de manière à former un ou plusieurs condensateurs différentiels mesurant la différence entre deux capacités de couplage. La figure 2a montre en coupe (dans le plan xz) une telle configuration comprenant deux électrodes émettrices 21a, 21b et une électrode réceptrice 21c, toutes de forme rectangulaire, ce qui ne ressort pas de la figure 2a puisqu'elles sont dans un plan perpendiculaire au plan xz. Les électrodes émettrices 21a et 21b, de même taille, sont reliées respectivement aux signaux alternatifs Va et Vb de même amplitude et fréquence, mais de polarités opposées. L'électrode réceptrice 21c est équidistante des électrodes émettrices 21a, 21b et séparée d'elles par des électrodes de blindage 21g de même forme et taille reliées a un potentiel de blindage Vg qui peut être la masse et/ou un des pôles de la battterie ou de l'alimentation, afin d'empêcher des couplages parasites. En l'absence de relief de la règle les deux capacités de couplage Cac entre l'électrode émettrice 21a et l' électrode réceptrice 21c et Cbc entre l'électrode émettrice 21b et l'électrode réceptrice 21c étant égales, les signaux couplés à l'électrode réceptrice 21c, égaux mais de polarités opposées, se compenseraient, donc le signal Vc sur l'électrode réceptrice serait nul. Si un élément du relief 11, un creux dans la figure 2a, se trouve exactement en face de l' électrode réceptrice 21c, les deux capacités de couplace Cac et Cbc entre électrodes émettrices et réceptrices restent aussi égales puisqu'elles sont également influencées par le relief : le signal couplé sur l'électrode réceptrice 21c restera donc nul, et ceci quel que soit l'écart H entre la règle 10 et le curseur 20. Si l'élément du relief 11 n'est pas exactement en face de l'électrode 21c, mais décalé d'une faible distance X sur l'axe x, les capacités de couplage Cac et Cbc ne seront plus équilibrées et un signal alternatif d'amplitude proportionnelle à la capacité différentielle (Cac-Cbc) apparaîtra sur l'électrode réceptrice 21c. La figure 2b montre cette capacité différentielle en fonction du décalage X du curseur. La courbe en trait continu correspond à une règle 10 conductrice, celle en pointillé à une règle 10 constituée en un matériau diélectrique. Si, par exemple, le curseur 20 est légèrement décalé à droite (X>0), la présence de la règle conductrice cachera davantage l'électrode émettrice 21b, résultant en une capacité différentielle (Cac-Cbc) positive. Par contre, une règle diélectrique augmentera davantage le couplage de l'électrode émettrice 21b à l'électrode réceptrice 21c, résultant en une capacité différentielle (Cac-Cbc) négative pour le même décalage du curseur (X>0). Si l'élément du relief 11 n'avait pas été un creux, tel que le montre la figure 2a, mais une bosse, la capacité différentielle aurait eu le signe opposé au cas décrits ci-dessus. Dans tous les cas, le capteur décrit est très sensible aux déplacements selon x, mais insensible au premier degré à ceux selon y et z, en tous cas pour de faibles écarts de la position d'équilibre (X=0) où la capacité différentielle (Cac-Cba) est nulle.

Les électrodes de blindage 21g limitent les couplages entre les électrodes émettrices 21a, 21b et réceptrice 21c à la région sise entre la règle 10 et le curseur 20. Si le curseur 20 est un diélectrique, tel qu'un circuit imprimé ou un substrat en verre ou en céramique, il peut être nécessaire de metre une électrode de blindage additionnelle sur le dos du curseur, afin de supprimer tout couplage par ledit diélectrique. Si le curseur 20 consiste en un circuit intégré sur un substrat semi-conducteur, les électrodes ne sont isolées du substrat que par une mince couche d'oxyde, et le substrat peut être dopé afin d'être assez conducteur pour tenir lieu d'électrode de blindage, si nécessaire.

L'application pratique de la configuration d'électrodes de la figure 2a se limite à la mesure de faibles déplacements ou à la détection de positions déterminées, telles que des références absolues placées sur des règles incrémentales : à cause de sa périodicité, une règle incrémentale ne permet une mesure absolue que dans l'intervalle d'une période. Une interruption de courant, une vitesse de déplacement excessive ou une perturbation peuvent provoquer une erreur de la position affichée égale à un nombre

4

EP 0 538 184 B1

entier de périodes. Les références absolues permettent de déterminer grossièrement dans quel intervalle d'une période le curseur se trouve, dont d'éviter ou au moins de détecter les erreurs de position. Une référence absolue doit donner un signal "vrai" dans un intervalle limité, et un signal "faux" ailleurs.

La figure 3a montre en coupe un tel capteur susceptible de servir d'élément de référence. L'élément de relief 311 de la règle 310 et les électrodes du curseur 320 ont un axe de symétrie (z) lorsqu'ils sont face à face. Les électrodes 321b, g, c, g, a forment des anneaux concentriques sur la surface du curseur, l'électrode réceptrice 321c étant située entre les électrodes émettrices 321a, 321b reliées aux signaux alternatifs Va, Vb et séparées d'elles par des électrodes de blindage 321g, reliées au potentiel de blindage Vg. L'élément de relief 311 servant de référence présente également un périmètre circulaire, et est creux dans la figure 3a, la règle étant supposée conductrice. La capacité différentielle (Cac-Cbc) sera alors positive lorsque le curseur de trouve en face de l'élément en creux du relief 311 et négative si cela n'est pas le cas : la figure 3b montre la capacité différentielle (Cac-Cbc) en fonction de la distance r dans le plan xy entre élément du relief 311 et curseur 320. Pour éviter le risque de signaux ambigus dus au retour à zéro de la capacité différentielle pour des distances r assez grandes, on peut augmenter la surface de l'électrode 321b ou la rapprocher de l'électrode réceptrice 321c. Ce capteur peut être utilisé dans deux dimensions. Une application possible consiste en une règle dont les éléments du relief sont périodiques selon x et y et en un curseur ayant plusieurs ensembles d'électrodes concentriques 321b, g, c, g, a également disposés périodiquement selon x et y, les périodes de la règle et du curseur étant légérement différentes, donnant lieu ainsi à un "vernier" bi-dimensionnel permettant de réduire la position (X, Y) du curseur de la distribution des états "vrai" ou "faux" mesurés sur chaque ensemble d'électrodes 321b, g, c, g, a. Enfin, si l'on veut utiliser le capteur de la figure 3a comme référence absolue le long d'un axe, une forme rectangulaire des électrodes sera peut-être plus optimale, mais le principe de mesure restera le même.

Les capteurs décrits ci-dessus peuvent être perturbés par des différences de potentiel entre règle et curseur, dues par exemple à des boucles de masse, à des charges statiques ou à la proximité de sources de bruit électrique, ceci malgré le fait que le signal provenant des électrodes émettrices a une forme d'onde et de fréquence connues, ce qui permet de le filtrer sélectivement.

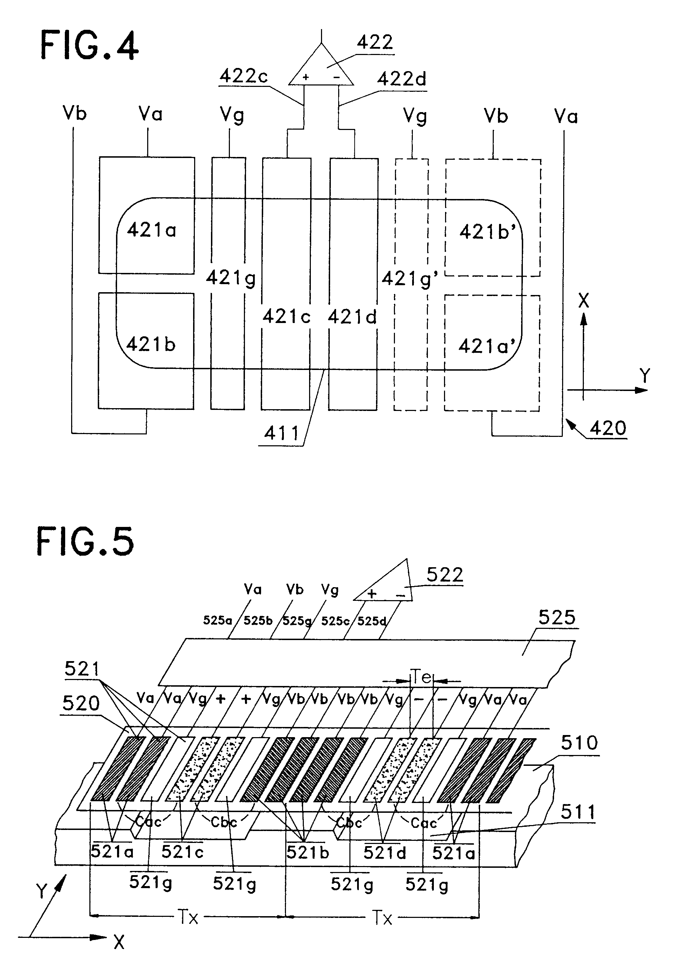

Un curseur ayant un arrangement d'électrodes tel que représenté à la figure 4 et décrit ci-après permet de réduire l'effet de ces perturbations d'au moins un ordre de grandeur, essentiellement par la présence, le long de l'électrode réceptrice 421c, d'une seconde électrode réceptrice 421d servant de référence ou d'électrode différentielle. Les électrodes réceptrices 421c et 421d sont connectées respectivement aux entrées 422c et 422d d'un amplificateur différentiel 422. Les électrodes émettrices 421a, 421b se trouvent disposées le long de l'électrode réceptrice 421c, la seconde électrode réceptrice 421d étant donc plus éloignée de celles-ci. Une électrode de blindage 421g sépare les électrodes émettrices 421a, 421b des électrodes réceptrices 421c, 421d. Les électrodes émettrices 421a, 421b étant respectivement connectées à des signaux alternatifs Va, Vb de même amplitude et fréquence, et de polarités opposées, un signal alternatif non nul sera capté par l'électrode réceptrice 421c, respectivement 421d, si l'élément du relief 411 de la règle 10 se trouvant en regard des électrodes 421 provoque des capacités différentielles (Cac-Cbc), respectivement (Cad-Cbd) non nulles. Le signal capté par l'électrode 421c sera plus fort que celui capté par l'électrode 421d, plus éloignée des électrodes émettrices 421a, 421b. La capacité entre deux électrodes allongées parallèles sises sur un plan conducteur décroit à peu près comme le carré de leur écartement, et la présence d'un autre plan conducteur représenté ici par la règle crée une atténuation supplémentaire qui fait que cette capacité décroit alors selon une loi exponentielle. Il est donc possible d'avoir une séparation très faible entre les électrodes réceptrices 421c et 421d tout en gardant une forte différence d'amplitude entre les signaux captés par celles-ci. Un tel arrangement sera donc sensible aux signaux des électrodes émettrices 421a, 421b puisqu'un signal différentiel sera capté par la paire d'électrodes réceptrices 421c, 421d et amplifié dans l'amplificateur différentiel 422, mais sera par contre insensible à des signaux dus à des différences de potentiel entre la règle 10 et le curseur 20, étant donné que les capacités entre l'électrode réeceptrice 421c et la règle et entre l'électrode réceptrice 421d et la règle sont pratiquement égales, les signaux sur chaque électrode réceptrice produits par des différences de potentiel entre la règle et le curseur, se compensant.

Mais si les différences de potentiel entre la règle 10 et le curseur 20 proviennent des électrodes émettrices du curseur, ce qui peut être le cas pour une règle conductrice isolée du curseur, le signal différentiel qui en résulte, dans le cas de capacités de couplage entre la règle et chaque électrode réceptrice légèrement différentes, n'est pas négligeable puisqu'il ne peut être rejeté par un filtre considérant qu'il est identique au signal directement couplé. L'arrangement d'électrodes émettrices doit donc être tel que, pour n'importe quelle position du curseur 20, la somme des signaux couplés des électrodes émettrices 421a, 421b à la règle 10 soit idéalement nulle. Ceci est obtenu grâce à des électrodes émettrices 421a' et

5

421b' supplémentaires, connectées respectivement à Va et à Vb, ainsi qu'à une électrode de blindage supplémentaire 21g', connectée à Vg, illustrées en pointillé dans la figure 4. La séquence des électrodes 421a' et 421b' en direction de x est l'inverse de celle des électrodes 421a et 421b, mais alors que ces dernières sont plus près de l'électrode réceptrice 421c, les premières sont plus près de l'électrode réceptrice 421d. Donc, si l'élément du relief 411 est placé de manière à augmenter le couplage de l'électrode 421a et à diminuer celui de l'électrode 421b, un signal alternatif ayant la polarité de Va apparaîtra surtout sur l'électrode réceptrice 21c; pour la même position le couplage de l'électrode 421a' diminue et celui de l'électrode 421b' augmente et un signal alternatif de polarité opposée à Va apparaîtra en premier lieu sur l'électrode réceptrice 421d. Comme les deux électrodes réceptrices 421c, 421d sont connectées à un amplificateur différentiel 422, les signaux se renforcent, ce qui est avantageux. En ce qui concerne la somme des signaux des électrodes émettrices 421a, 421b, 421a', 421b' couplés sur la règle, elle est nulle puisque la règle et le curseur de la figure 4 ont un plan de symétrie et que les électrodes émettrices symétriques sont connectées à des signaux de polarités opposées.

Tous les capteurs décrits ci-dessus ont un domaine de mesure limité et une linéarité suffisante qu'à proximité de X = 0, c'est-à-dire lorsqu'un élément du relief 411 se trouve exactement en face des électrodes 421 du curseur 20. Une possibilité d'augmenter le domaine de mesure et/ou d'améliorer la résolution qui a été évoquée plus haut comme application possible du capteur de la figure 3 est d'avoir un relief 411 périodique ainsi qu'un réseau périodique d'ensembles d'électrodes comme montré aux figures 2a, 3a, 4, les périodes étant légèrement différentes entre la règle 10 et le curseur 20 afin d'obtenir un effet de "vernier". Par exemple un capteur mesurant le long de l'axe x pourrait avoir une règle dont la période du relief 411, c'est-à-dire la distance entre éléments identiques du relief, serait de 1 mm, et un curseur ayant dix ensembles d'électrodes répartis le long de x avec une période de 1.1 mm; si pour X = 0 le premier de ces dix ensembles fait face à un élément du relief 411, les neuf autres ensembles seront tous décalés le long de x des éléments du relief 411 les plus proches d'eux; pour X = 0.1 mm le second ensemble sera en face d'un élément du relief, pour X = 0.2 mm le troisième, etc. L'utilisation de cet effet de "vernier" permet donc des domaines de mesure plus grands mais nécessite une grande surface de curseur, surtout si on veut une résolution fine de la position, et de plus seulement les ensembles d'électrodes très proches d'un élément de la règle, donc suffisamment sensibles, contribueront à l'évaluation de la position.

Une meilleure façon d'éviter les limitations du domaine de mesure et de la résolution est d'avoir un capteur conforme à l'invention dont le curseur 520 comprend un reseau d'électrodes 521 identiques et des circuits de commutation permettant de configurer ces électrodes 521 en groupes connectées à une même ligne rattachée à Va, Vb, Vg, ou l'entrée d'un amplificateur si les électrodes réceptrices font aussi partie du réseau. Par un circuit de commutation approprié, les électrodes 521 du réseau peuvent donc être configurées en électrodes émettrices, par exemple, qui peuvent être déplacées le long de l'axe de mesure en rajoutant une électrode d'un côté au groupe et en en enlevant une de l'autre. Si le pas des électrodes du réseau correspond à la résolution, ces circuits de commutation peuvent être du type décrit dans le brevet US N° 3.857.092 dans lequel la configuration électrique du réseau d'électrodes est commutée de manière à "suivre" les électrodes flottantes de la règle ou, dans le cas présent, les éléments du relief. Une alternative est de déplacer la configuration électrique des électrodes du réseau de manière à "balayer" la règle, la position ou le déplacement étant obtenu par une méthode de zéro ou de phase. On pourra ainsi utiliser les passages à zéro de l'enveloppe du signal sur l'électrode réceptrice, de façon analogue à la méthode décrite dans le brevet US N° 4.437.055, revendications 6 et 7. Si une résolution bien plus fine que le pas des électrodes 21 du réseau est recherchée, le déplacement de la configuration électrique du réseau peut se faire en décalant seulement une partie des électrodes à la fois, tel que décrit dans le brevet US N° 4.841.225.

Le principe d'un capteur conforme à l'invention, évitant ces limitations du domaine de mesure et de la résolution est illustré à la figure 5. Une règle 510 comporte un relief 511 périodique selon l'axe x, la période, ou pas entre éléments du relief 511, étant Tx. Un curseur 520 comporte un réseau d'électrodes identiques 521 dont le pas entre électrodes est Te. Comme il y a 8 électrodes par pas Tx de la règle, on a Te = Tx/8. Un circuit de commutation 525 permet la connection de n'importe quelle électrode 521 du réseau à une des lignes conductrices suivantes : la ligne 525a connectée au signal alternatif Va, la ligne 525b connectée au signal alternatif Vb de même amplitude et fréquence que Va mais de polarité opposée, la ligne 525g connectée au potentiel de blindage Vg, les lignes 525c et 525d connectées aux entrées d'un amplificateur différentiel 522. Une distribution de signaux obtenue par ce circuit de commutation 525 sur les électrodes 521 du réseau est montrée à la figure 5. En prenant les 8 premières électrodes depuis la gauche, deux électrodes 521a sont connectées à la ligne 525a, donc à Va, une électrode 521g est connectée à la ligne 525g, donc à Vg, deux électrodes 521c sont connectées à la ligne 525c, donc à une entrée de l'amplificateur différentiel 522, une électrode 521g est connectée à la ligne 525g, donc à Vg, et deux électrodes 521 sont connectées à la ligne 525b, donc à Vb. Un élément du relief 511 de la règle 510 est en face d'une partie de ces 8 électrodes 21. Dans l'intervalle d'une période Tx du relief 511, la configuration des électrodes du curseur correspond essentiellement à l'arrangement d'électrodes décrit dans la figure 2a et le texte accompagnant. La figure 5 montre deux groupes d'électrodes 521a et 521b reliées à des signaux Va et Vb, et la figure 2a montrant deux électrodes 21a et 21b reliées à Va et Vb. Ces deux groupes d'électrodes, repectivement électrodes sont disposés des deux côtés d'un groupe d'électrodes 521c, respectivement d'un électrode 21c, servant d'électrode réceptrice et reliées à un amplificateur. Les groupes d'électrodes 521a, b, c sont séparés par des électrodes 521g reliées à Vg, respectivement des électrodes de blindage 21g sont reliées à Vg et/ou à un substrat conducteur. Pour plus de commodité, les capacités de couplage sont définies de façon semblable dans les figures 5 et 2a en étendant leur définition à des groupes d'électrodes : par exemple Cac définira la capacité entre un groupe d'électrodes 521 reliées à la ligne 525a donc à Va et un groupe d'électrodes 521 reliées à la ligne 525c allant à une entrée d'un amplificateur.

La même distribution de signaux pourrait se retrouver sur les huit prochaines électrodes, donc face au prochain élément du relief 511. Ce n'est pas le cas ici, où la distribution de signaux ne se répète que toutes les seize électrodes 521, donc sur une période de 2Tx, comme le montre la figure 5. En fait, la distribution de signaux en face de l'élément suivant du relief 511, diffère de celle en face de l'élément précédent en ce que les polarités des signaux alternatifs sont inversées, puisque Vb remplace Va et vice-versa par rapport aux électrodes 521 distantes d'une période Tx, et que les électrodes 521 connectées en électrodes réceptrices sont reliées à la ligne 525d, donc à l'autre entrée de l'amplificateur différentiel 522. Avec une telle distribution de signaux, en supposant une règle 510 conductrice et des éléments du relief 511 creux, un petit déplacement du curseur 520 vers la droite donnera un signal ayant la polarité de Va, car Cac est supérieur à Cbc en face du premier élément du relief 511 sur le groupe d'électrodes 521c reliées à une entrée de l'amplificateur différentiel 522 et à un signal ayant la polarité de Vb, car Cac est inférieur à Cbc en face du second élément du relief 511 sur le groupe d'électrodes 521d relié à l'autre entrée de l'amplificateur 522.

Un faible déplacement du curseur 520 résulte donc en un signal différentiel entre les deux entrées de l'amplificateur différentiel 522, alors que des différences de potentiel entre la règle et le curseur affecteront également les deux groupes d'électrodes, résultant en un signal différentiel négligeable. A cause de cette configuration complètement différentielle aussi bien des électrodes émettrices que réceptrices dans l'intervalle 2Tx, ce capteur a essentiellement les mêmes avantages que celui décrit en référence à la figure 4, c'est-à-dire insensibilité aux différences de potentiel entre règle et curseur et signal total nul couplé du curseur 520 à la règle 510.

La distribution de signaux sur le réseau d'électrodes 521 peut également être déplacée à droite ou à gauche par le circuit de commutation 525 ce qui permet par exemple de "suivre" les éléments du relief 511 de la règle 510 en utilisant le signal de sortie de l'amplificateur différentiel 522 comme signal d'erreur, à la manière d'une boucle de servo-commande. Alternativement, la distribution de signaux peut "balayer" le réseau d'électrodes 521, les passages par zéro de l'enveloppe du signal de sortie de l'amplificateur différentiel permettant de trouver la position relative du curseur 520.

L'intégration des fonctions réceptrices dans le réseau d'électrodes 521, c'est-à-dire celles reliées aux entrées de l'amplificateur différentiel 522 par les lignes 525c et 525d et par le circuit de commutation 525 demande une réalisation soigneuse de ce dernier, qui évite tous les couplages de signaux alternatifs, surtout Va et Vb, à ces lignes 525c et 525d. En particulier, les fonctions de commutation ne peuvent être réalisées par des commutateurs simples tels qu'un seul transistor a effet de champ (MOS), car la capacité restante en étant déclenché n'est pas négligeable ici. Les électrodes 521 du réseau doivent donc être reliées aux lignes 25a, 25b, 25c, 25d par deux commutateurs simples en série, un troisième commutateur mettant la connection entre les deux premiers au potentiel de blindage lorsque ceux-ci sont ouverts, afin de supprimer les signaux couplés capacitivement des électrodes reliées à Va ou Vb par les commutateurs ouverts aux lignes 525c, 525d.

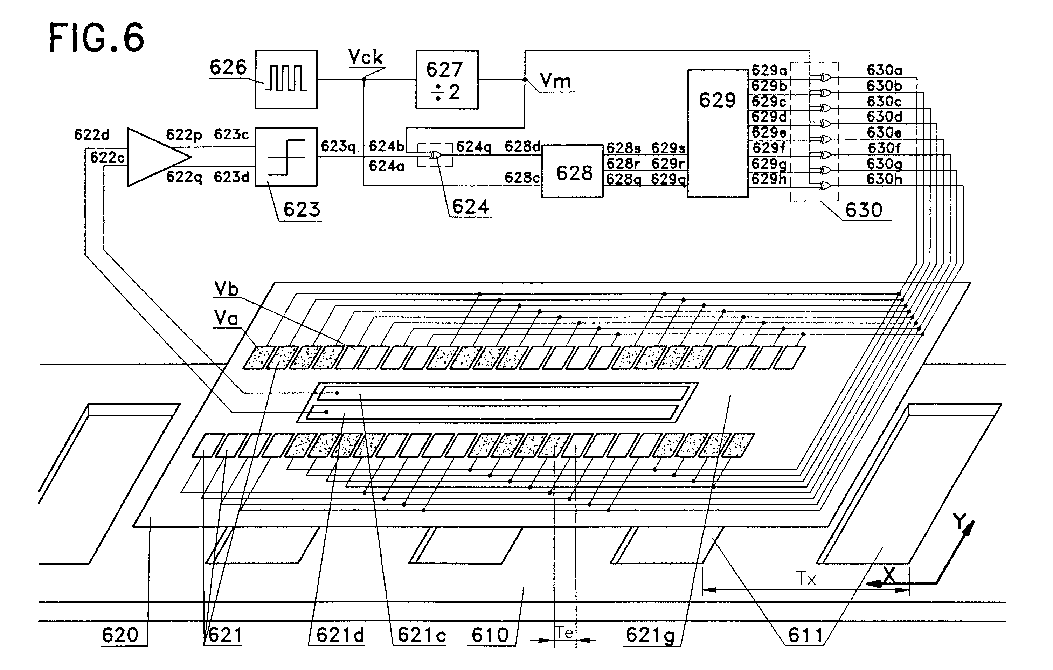

Un capteur conforme à l'invention, qui présente les mêmes avantages que le précédent, mais qui nécessite un circuit de commutation plus simple et qui permet un arrangement des électrodes émettrices et de leurs interconnections plus facile à isoler de couplages néfastes, est représenté à la figure 6. Un curseur 620 est montré en perspective au-dessus d'une règle 610 ayant un relief 611 de période Tx selon l'axe des x. Le curseur 620 comporte deux réseaux d'électrodes 621 émettrices alignés selon x, ainsi que deux électrodes réceptrices 621c, 621d de forme allongée également alignées selon x disposées entre ces réseaux. Des électrodes de blindage 621g entourent les deux électrodes réceptrices 621c, 621d. La longueur selon x ce celles-ci correspond à un nombre entier de périodes Tx, et les réseaux d'électrodes émettrices sont plus longs pour éviter des erreurs provenant de conditions de couplages non homogènes aux extrémités des électrodes réceptrices 621c, 621d. En fait, les capacités de couplage décroissent si fortement avec la distance qu'une longueur supplémentaire d'électrodes émettrices de Tx/2 est en général suffisante. Il est aussi possible d'avoir des réseaux d'électrodes émettrices 621 plus courts que les électrodes réceptrices 621c, 621d. Dans ce cas, c'est les réseaux d'électrodes émettrices 621 qui doivent avoir une longeur selon x correspondant à un nombre entier de périodes Tx. Pour plus de clarté dans la figure 6, les électrodes 621 du réseau ont un pas Te égal à Tx/8, donc huit électrodes par période Tx. Pratiquement, Tx serait de l'ordre du mm et les électrodes 621 du réseau auraient un pas aussi fin que possible, afin d'arriver à une résolution suffisamment fine permettant d'éviter des méthodes complexes d'interpolation. Sur un circuit intégré, Te pourrait être de quelques micromètres à quelques dizaines de micromètres, assurant une résolution de l'ordre du micromètre, comme décrit plus loin. Le besoin d'obtenir un pas Te fin, une grande précision géométrique des contours d'électrodes, une très bonne planéité des électrodes nécessaire à cause de la forte influence de la distance sur le couplage, et la possibilité d'intégrer les circuits électroniques sur le curseur 620, rendent une réalisation du curseur sur un circuit intégré très intéressante.

Sur la figure 6 est également représenté le schéma d'un circuit électronique pouvant être utilisé avec le capteur décrit. Pour la clarté, ce schéma est dessiné en dehors du curseur 620, alors qu'il peut en faire partie sur un seul circuit intégré. Dans tous les cas, des précautions doivent être prises pour éviter des couplages parasites; comme les électrodes réceptrices 621c, 621d sont ici clairement séparées du reste, les précautions à prendre sont connues et, consistent par exemple à rapprocher l'amplificateur différentiel 622 des électrodes réceptrices autant que possible. Le circuit fonctionne comme suit : le signal alternatif différentiel capté sur les électrodes réceptrices 621c et 621d est amené aux entrées 622c et 622d de l'amplificateur différentiel 622. Les sorties 622p, 622q de celui-ci sont reliées aux entrées 623c, 623d d'un comparateur 623 qui transforme le signal alternatif différentiel en un signal digital. La sortie 623q du comparateur 623 est reliée a une entrée 624a d'une porte ou-exclusif 624 ayant son autre entrée 624b reliée à un signal de modulation Vm qui est aussi utilisé pour moduler les signaux destinées aux réseaux d'électrodes émettrices 621. Ainsi le signal à la sortie 624q de la porte 624 correspond finalement à la polarité, par rapport aux signaux Va ou Vb, du signal différentiel capté par les électrodes réceptrices 621c et 621d. En d'autres termes, cette porte ou-exclusif 624 enlève la composante de modulation Vm du signal et est donc un démodulateur. Le signal alternatif Vm est dérivé du signal d'horloge Vck, généré par un oscillateur 626 et divisé par deux grâce à un diviseur de fréquence 627. Ce signal d'horloge Vck est aussi relié à l'entrée de comptage 628c d'un compteur-décompteur binaire 628, qui compte ou décompte donc en fonction du signal à la sortie 624q de la porte ou-exclusif 624 reliée à l'entrée de direction de comptage 628d de ce compteur-décompteur 628. Les sorties binaires 628q, 628r, 628s de pondération 1, 2, 4 du compteur 628 sont reliées respectivement aux entrées 629q, 629r, 629s d'un décodeur 629 générant à ses huit sorties 629a à 629h le code cyclique suivant en fonction du code binaire à trois bits à ses entrées :

| Entrées du décodeur | | | Sorties du décodeur | | | | | | | |
|---|---|---|---|---|---|---|---|---|---|---|
| s | r | q | a | b | c | d | e | f | g | h |
| 0 | 0 | 0 | 0 | 0 | 0 | 0 | 1 | 1 | 1 | 1 |
| 0 | 0 | 1 | 1 | 0 | 0 | 0 | 0 | 1 | 1 | 1 |
| 0 | 1 | 0 | 1 | 1 | 0 | 0 | 0 | 0 | 1 | 1 |
| 0 | 1 | 1 | 1 | 1 | 1 | 0 | 0 | 0 | 0 | 1 |
| 1 | 0 | 0 | 1 | 1 | 1 | 1 | 0 | 0 | 0 | 0 |
| 1 | 0 | 1 | 0 | 1 | 1 | 1 | 1 | 0 | 0 | 0 |
| 1 | 1 | 0 | 0 | 0 | 1 | 1 | 1 | 1 | 0 | 0 |
| 1 | 1 | 1 | 0 | 0 | 0 | 1 | 1 | 1 | 1 | 0 |

Les chiffres zéro et un de la table ci-dessus représentent des états logiques du circuit, soit par exemple les potentiels négatif et positif de l'alimentation. La séquence des états des sorties du décodeur se décale donc vers la droite si le compteur 628 compte, et vers la gauche s'il décompte. Les sorties du décodeur 629a à 629h traversent un modulateur 630 consistant en huit portes ou-exclusif ayant une de leurs entrées reliées à une des sorties 629a à 629h du décodeur 629 et l'autre au signal de modulation Vm. Les sorties du modulateur 630 sont reliées aux électrodes 621 émettrices des deux réseaux. Comme le montrent les lignes de connection de la figure 6, les électrodes 621 du premier réseau, en haut de la figure 6, sont reliées aux sorties du modulateur 630 dans la séquence 630a, b, c, d, e, f, g, h, a, b, c, etc., alors que les électrodes 621 du second réseau, en bas de la figure 6, sont reliées dans la séquence 630e, f, g, h, a, b, c, d, e, f, etc., ce qui fait que les électrodes correspondantes de même coordonée X de chaque réseau auront toujours des signaux alternatifs de polarités opposées, étant donné qu'elles sont reliées par le modulateur 630 à des sorties du décodeur 629 décalées de quatre électrodes l'une par rapport à l'autre, donc toujours complémentaires.

En supposant que les trois sorties 628q, r, s sont à zéro, et en désignant arbitrairement comme Va le signal alternatif de même polarité que le signal de modulation Vm sur les électrodes 621 du réseau et comme Vb celui de polarité opposée à Vm, la séquence de signaux alternatifs sur les électrodes 621 émettrices dans l'intervalle Tx sera Va, Va, Va, Va, Vb, Vb, Vb, Vb pour le premier réseau et Vb, Vb, Vb, Vb, Va, Va, Va, Va pour le second : les deux séquences sont effectivement de polarités opposées. Les électrodes 621 des réseaux reliées au signal Va sont ombrées pour plus de clarté. On remarque que la configuration des signaux sur le curseur face à un élément du relief 611 est la même que celle illustrée à la figure 4 y compris les électrodes en pointillé. Ici aussi, les groupes d'électrodes de la figure 6 jouent le même rôle que les électrodes dans la figure 4. Les groupes de quatre électrodes 621 à Va du premier réseau de la figure 6 correspondent à l'électrode 421a de la figure 4, les groupes de quatre électrodes 621 reliées à Vb du premier réseau à l'électrode 421b, les groupes de quatre électrodes 621 reliées à Va du second réseau à l'électrode 421a', et les groupes de quatre électrodes 621 reliées à Vb du second réseau à l'électrode 421b'. Les électrodes réceptrices et de blindage sont les mêmes. Ainsi ce capteur a essentiellement les mêmes avantages que celui décrit en référence à la figure 4, c'est-à-dire insensibilité au différences de potentiel entre la règle et le curseur, signal total nul couplé du curseur 620 à la règle 610, mais de plus, l'étendue de mesure est illimitée et la résolution est meilleure.

Si le curseur 620 se déplace un peu sur l'échelle 610, un signal alternatif différentiel apparaîtra entre les électrodes réceptrices 621c, 621d, étant donné que les signaux couplés préférentiellement sur chacune par le réseau d'électrodes émettrices 621 le plus proche auront des polarités opposées. Ce signal différentiel sera amplifié dans l'amplificateur différentiel 622, converti en un signal digital (à deux états logiques) par le comparateur 623, démodulé dans la porte ou-exclusif 624, utilisant comme référence le signal alternatif Vm, pour commander la direction de comptage du compteur-décompteur 628, ce qui fera osciller celui-ci autour d'une valeur moyenne représentant la position.

La résolution désirée étant normalement plus fine que le pas Te des électrodes 621 des réseaux, un moyennage ou filtrage utilisant plusieurs valeurs successives du compteur 628 doit être fait, soit par des circuits électroniques additionnels soit par un microcontrôleur programmé à cet effet. Un moyennage prend par exemple la somme de N valeurs successives du compteur 629 et divise la somme par N. Un filtre digital passe-bas du premier ordre additionne sans cesse la valeur courante du compteur divisée par N à un total tout en soustrayant de celui-ci sa valeur divisée par N. De tels algorithmes sont connus et faciles à implémenter en matériel ou en logiciel. Mais pour éviter la non-linéarité dans l'intervalle des pas Te, il faut une certaine erreur statistique de position, normalement due au bruit thermique, mais pouvant aussi être introduite artificiellement, dont l'écart-type doit être supérieur à la moitié de la résolution des valeurs individuelles du capteur, ici Te. Sinon, une résolution plus fine peut également être obtenue par d'autres moyens, par exemple en ne décalant la distribution de signaux que sur une partie des électrodes 621 des réseaux à la fois, comme décrit dans le brevet US N° 4.841.225, au lieu de décaler la distribution sur l'ensemble des réseaux.

L'intégration du circuit électronique et des électrodes sur un seul circuit intégré offre plusieurs avantages évoqués plus haut pour des capteurs conformes à l'invention, mais, dans ce cas la capacité due à la couche isolante très mince entre les électrodes réceptrices et le substrat, beaucoup plus grande que les capacités de couplage Cac, Cbc, Cad, Cbd réduira les signaux d'entrée au niveau de quelques microvolts. D'où l'importance de la conception de l'étage d'entrée de l'amplificateur différentiel, qui devrait se trouver aussi près que possible de ces électrodes réceptrices, isolé et/ou blindé du reste de l'électronique, il est à la limite concevable que l'électrode réceptrice soit directement la grille d'un transistor à effet de champ (FET), ou même que celle-ci soit supprimée, le canal étant alors l'électrode réceptrice; mais la capacité entre électrode et substrat sera probablement plus importante, ce qui fait qu'une solution plus classique à électrode réceptrice, au moins partiellement séparée de la grille, sur une couche d'oxyde épais, sera préférable. Deux circuits cités ici sont intéressants comme étage d'entrée, car ils tendent les deux à éliminer l'influence de cette capacité de l'électrode au substrat.

Le premier est l'amplificateur de charge, décrit par exemple dans "Measurement systems : Applications and Design" par E.O. Doebelin, Library of Congress Nr 66-18475, pp623-625. En utilisant une capacité en contre-réaction, entre la sortie d'un amplificateur et son entrée inverseuse, celui-ci maintient l'entrée, en l'occurence une électrode réceptrice, à un zéro virtuel, évitant ainsi un courant capacitif vers le substrat. Pour ce faire, l'amplificateur nécessite un gain en boucle ouverte et une largeur de bande élevés comme la capacité au substrat s'ajoute à la capacité d'entrée. L'avantage de l'amplificateur de charge réside dans la facilité de blindage de l'électrode, aussi en configuration différentielle, où les deux électrodes réceptrices peuvent être au-dessus d'un même blindage ou d'une même diffusion.

Le second circuit est le montage en source suiveuse d'un transistor à effet de champ, la grille étant l'entrée, la source la sortie. L'amplification en tension est légèrement inférieure à un, l'impédance d'entrée très haute et celle de sortie assez basse. Pour compenser la plus grande partie de la capacité de l'électrode au substrat, il suffit de relier une diffusion ou une couche métallique sise sous l'électrode à la sortie du suiveur, ce qui aura pour effet d'augmenter le signal de sortie pour une charge couplée donnée. Ici aussi, une bonne largeur de bande est nécessaire comme cette capacité au substrat fait partie de la capacité d'entrée du transistor.

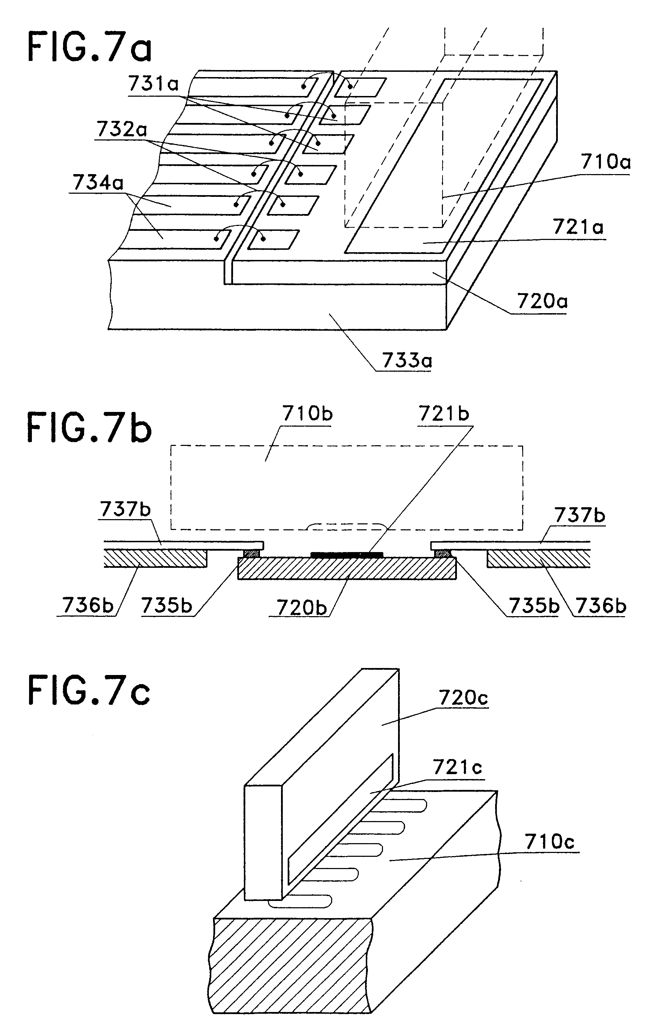

Quelques réalisations possibles de curseurs 720 de capteurs conformes à l'invention sont montrées dans les figures 7a, 7b, 7c, la position relative de la règle 710 étant montrée en pointillé. La figure 7a montre un curseur 720a consistant en un circuit intégré. Les électrodes 721a, esquissées ici par leur périmètre, occupent la partie droite du circuit, en face de la règle 710a. A gauche se trouvent des pads 731a pour le bonding, des fils 732a de bonding reliant ces pads aux connexions 734a d'un support 733a, le reste de la surface du curseur contenant le circuit élecronique. Une telle réalisation se prête à des règles 710a étroites, n'interférant pas avec les fils 732a de bonding et leur protection pas montrée. la figure 7b montre aussi un curseur 720b consistant en un circuit intégré, ayant des "bumps" 735b sur deux bords auxquels sont connectés, par "Tape Automated Bonding", les conducteurs 737b d'un support 736b. les électrodes 721b, esquissées par leur périmètre, s'étendent au milieu du curseur 720b, le reste de la surface contenant le circuit électronique. Si un écart H d'au moins 0.1 mm entre curseur 710b et règle 720b est possible, celle-ci peut s'étendre au-dessus des connexions et des conducteurs 737b et ne pas être limitée dans sa largeur.

Pour protéger de tels curseurs, on peut les recouvrir d'un coating conforme ou les encapsuler dans des boîtiers assez minces pour ne pas avoir un trop grand écart H entre la règle et la surface du curseur. Si une meilleure protection est nécessaire, surtout en ce qui concerne la partie du curseur en regard de la règle, on peut intercaler une plaque diélectrique mince entre les deux, ou encore mettre les électrodes sur la surface de cette plaque qui est opposée à la règle, le couplage se faisant dans les deux cas à travers la plaque. La figure 7c montre une réalisation facile à protéger : ici, le plan des électrodes 721c du curseur 720c est perpendiculaire à celui de la règle 710c : ceci est rendu possible par la disposition des électrodes 721c, esquissées par leur périmètre, le long du bord du curseur, afin d'arriver à un écart suffisamment faible entre le relief et les électrodes. L'arrangement d'électrodes de la figure 5 se prêterait bien à ce cas, comme toutes les électrodes font partie d'un réseau linéaire pouvant être disposés très près du bord. Le curseur 720c peut donc être bien protégé, seul son bord se trouve près de la règle 710c.

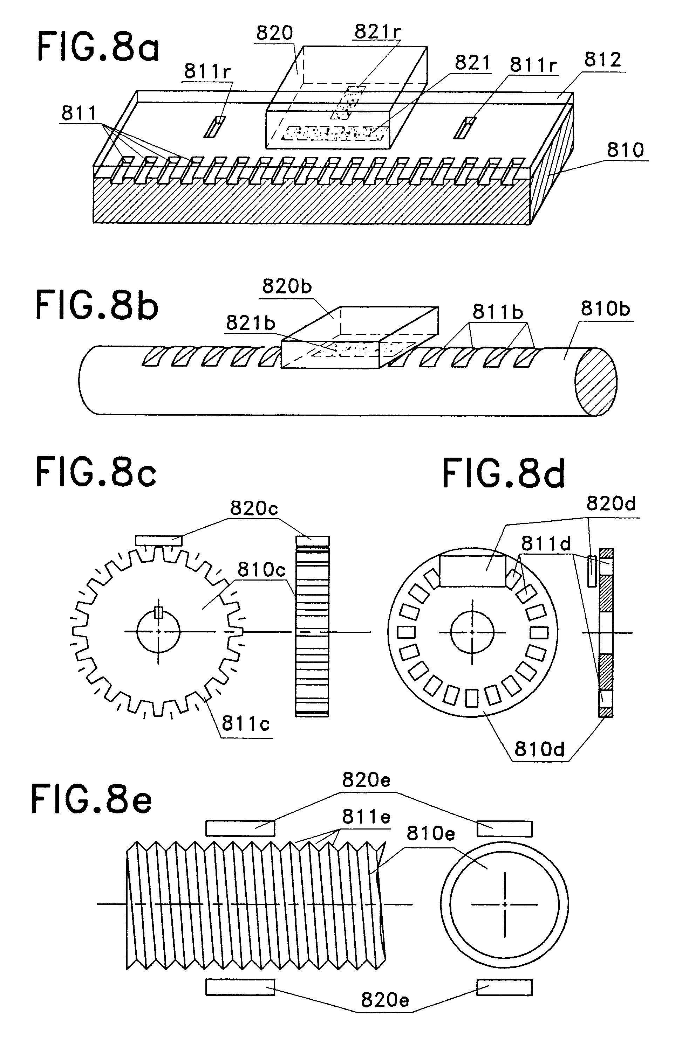

Un avantage intéressant des capteurs conformes à l'invention réside dans la diversité des règles susceptibles d'être utilisées et leur construction simple. Les figure 8a à 8e illustrent quelques exemples de règles linéaires et curvilinéaires de capteurs conformes à l'invention, compatibles avec le type de curseurs décrits ci-dessus. La figure 8a représente une règle 810 linéaire ayant un relief périodique 811 le long d'une piste et quelques éléments de relief 811r le long d'un tracé parallèle à cette piste. Le relief 811 de la piste permet une mesure incrémentale telle que décrite par exemple en référence aux figures 5 et 6. Les éléments de relief 811r disposés latéralement servent d'élément de référence. Le curseur 820 comporte donc un arrangement d'électrodes 821, esquissé par son périmètre, permettant la mesure incrémentale le long de ce relief 811, donc du type montré par exemple aux figures 5 ou 6, et un ou plusieurs arrangements d'électrodes 821r pour lire les éléments de relief 811r servant de référence, ces arrangements pouvant être du type représentés aux figures 2, 3 ou 4. La règle 810 est de plus recouverte d'un diélectrique 812 pour avoir une surface lisse, et empêcher la poussière ou d'autres contaminants de remplir les éléments du relief 811 et 811r, creux ici. Ce diélectrique peut par ailleurs ou remplir ces creux ou simplement les couvrir, s'il est en forme de plaque. la règle 810 peut être conductrice ou diélectrique. Une variante consiste à avoir le relief 811 sur le diélectrique 812 du côté éloigné du curseur 820, le diélectrique 812 de couverture devenant ainsi la règle, montée dans ce cas sur une base sans relief. Finalement, une échelle de lecture graduée telle qu'en comportent des pieds à coulisse ou des règles métalliques, peut être directement utilisée comme règle, étant donné que l'échelle est gravée.

La figure 8b montre une tige cylindrique munie d'une crémaillère servant de règle 810b linéaire, comme on en trouve dans des comparateurs à cadran, où elles sont guidées par des paliers. Avec un curseur 820b plat, il suffit d'avoir un arrangement d'électrodes 821b du curseur assez étroit, de l'ordre du mm pour une tige ayant 4 mm de diamètre, de façon que la courbure transversale à la direction de mesure de la tige n'influence pas la mesure. La figure 8c montre un pignon (engrenage) utilisé comme règle 810c circonférentielle avec la denture servant de relief 811c, ce qui permet de réaliser de manière très simple un codeur rotatif. Ici aussi, le curseur 820c est plat et la règle 810c incurvée, cette fois dans la direction de mesure : il suffit d'avoir un diamètre de pignon bien supérieur à la longueur de l'arrangement d'électrodes. La figure 8d représente une règle 810d rotative consistant en un disque plat dans lequel sont étampées ou gravées des ouvertures donnant un relief 811d. Si les électrodes du curseur 820d sont droites, le diamètre du relief 811d doit être bien supérieur à la longueur de l'arrangement des électrodes pour éviter des non-linéarités. La figure 8e montre une vis micrométrique servant de règle 810e permettant de mesurer la translation et la rotation, dont le relief 811e forme le pas : de telles vis sont assez précises et souvent incorporées dans les instruments de mesure où elles servent également à l'avancement de la butée de mesure. Pour améliorer la précision, deux curseurs 820e diamétralement opposés peuvent être utilisés.

Des capteurs conformes a l'invention peuvent être facilement configurés de façon à mesurer selon deux dimensions. Un curseur possible à une telle application a été décrit plus haut. Un réseau à deux dimensions d'ensembles d'électrodes telles qu'illustrées aux figures 2 ou 3 et comportant des périodes selon x et y légèrement différentes des périodes correspondantes de la règle, l'effet de "vernier" étant exploité pour la détermination de deux distances orthogonales X et Y. Une autre possibilité principielle consisterait en un réseau à deux dimensions d'électrodes formant une grille dont alternativement les lignes d'électrodes parallèles à x, puis les colonnes parallèles à Y peuvent être reliées. Pour trouver Y, une configuration électrique telle que montrée à la figure 5, s'étendant selon y, est répartie entre les lignes d'électrodes; puis pour trouver X, les électrodes sont reliées par colonnes et une configuration semblable s'étendant selon x est répartie sur ces colonnes. le curseur alterne donc entre la recherche de X et de Y.

Une solution permettant une plus grande économie de moyens consiste simplement à utiliser deux senseurs linéaires, ou davantage, sur un même curseur et pour une même règle à deux dimensions : au moins un senseur selon x, et au moins un senseur selon y. S'ils sont du type décrit en référence aux figures 5 ou 6, il ne peut y avoir de couplages entre les senseurs par la règle. Celle- ci doit évidemment avoir un relief minimisant l'influence d'une coordonnée sur l'autre. Dans un cas extrême, on peut s'imaginer un senseur très étroit; si le relief consiste en une grille de trous, il se peut très bien qu'un senseur se trouve entre deux rangées de trous et ne puisse détecter ceux-ci. Ce cas extrême montre quels sont les paramètres à optimaliser pour éviter l'influence entre coordonnées. D'abord, la largeur effective de la configuration des électrodes devrait être à peu près égale à la période du relief, ou à un multiple de celle-ci. Les éléments du relief ne devraient pas être trops petits afin d'éviter des zones mortes, ni l'écart H entre les senseurs et la règle trop faible, pour les mêmes raisons. Des valeurs de l'écart optimales se situent entre 0.1 et 0.3 fois la période du relief pour des règles conductrices, un peu plus pour des diélectriques. Finalement, un avantage de la solution à senseur séparés selon x et y réside en une plus grande tolérance à des erreurs de désaxement entre règle et senseurs, ce qui est particulièrement important pour les "souris" utilisées comme périphériques d'ordinateur.

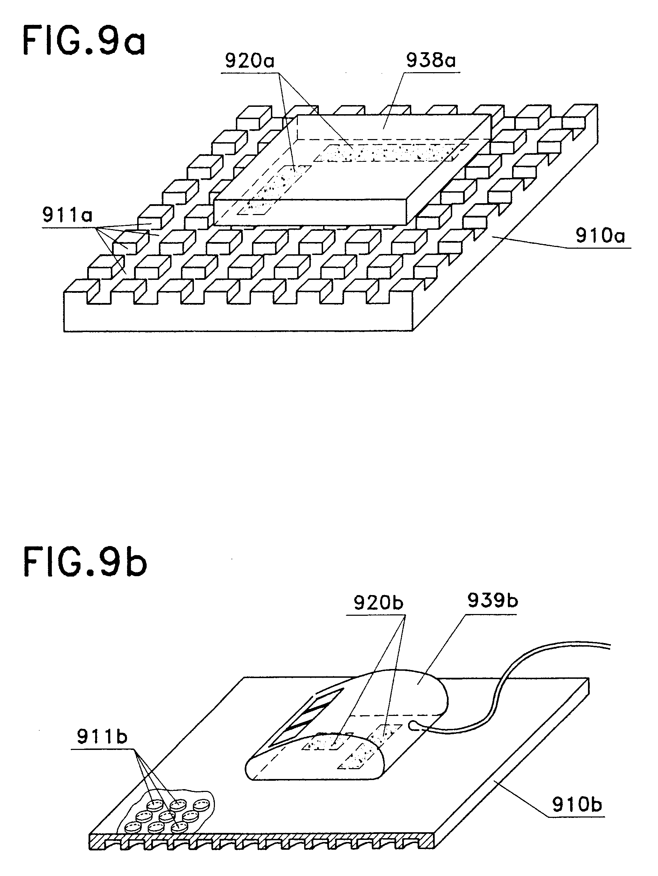

Les figures 9a et 9b montrent deux exemples de règles à deux dimensions. Le premier, illustré à la figure 9a, montre comme règle 910a une plaque métallique ou diélectrique comportant deux jeux orthogonaux de rainures périodiquement espacées. Deux senseurs 920a sont disposés sur un support 938a commun. Le second exemple représenté à la figure 9b comprend une règle 910b, consistant en une feuille diélectrique servant de base à une souris 939b comprenant deux senseurs 920b. La feuille présente une surface supérieure lisse pour faciliter les mouvements de la souris, mais comporte un relief 911b en-dessous, lu par les senseurs 920b à travers le diélectrique de la règle 910b.

D'autres règles pourraient être constituées par des feuilles de papier comportant un relief imprimé par le moletage des roues d'entraînement du papier de tables traçantes. Les textiles présentent également un relief périodique selon deux dimensions. Dans ce dernier cas, et dans d'autres cités plus haut, il serait intéressant que la période de la configuration électrique des électrodes du curseur puisse être adaptée à celle du relief de la règle, pour pouvoir si possible utiliser le même curseur dans différentes applications. Une possibilité est d'ores et déjà donnée par la sensibilité d'un curseur du type illustré aux figures 5 ou 6 aux harmoniques spatiaux du relief. Si par exemple le profil du relief dans l'axe de mesure est carré, dû par exemple à des rainures dans une surface plate, le curseur peut détecter celui des harmoniques de ce profil qui correspondra à sa propre période. On peut donc avoir une règle dont la période du relief est par exemple trois fois celle de la configuration électrique du curseur. Alternativement, le circuit de commutation des électrodes peut être réalisé de façon à permettre un choix de plusieurs périodes sélectives. Au besoin, la sélection de la période correcte peut se faire automatiquement. Ainsi, une possibilité consisterait à "balayer" le curseur électrode par électrode et à détecter la périodicité du relief par les passages à zéro du signal détecté.

L'invention pourra également être adaptée à des capteurs de positions tri-dimensionnels ou à des capteurs comportant un très grand nombre d'électrodes émettrices par pas du ou des reliefs périodiques en creux et en élévations.

**Revendications**

1. Capteur capacitif de position comprenant un curseur (20) et une règle (10) séparés l'un de l'autre par une distance (H) prédéterminée et susceptibles d'être déplacés l'un par rapport à l'autre suivant au moins une direction de mesure (x), le curseur comportant au moins deux électrodes émettrices (21a, 21b) et au moins une électrode réceptrice (21c) et des premiers moyens (629) pour générer des signaux électriques appliqués sur les électrodes émettrices et des seconds moyens (623, 624) pour évaluer les signaux reçus par les électrodes réceptrices de façon à déterminer la position relative du curseur (20) et de la règle (10), caractérisé en ce que la règle (10) comprend un relief périodique constitué en un matériau diélectrique ou conducteur d'une extrémité à l'autre de ce relief périodique et présentant des éléments topographiques (11) en creux ou en élevation arrangés suivant au moins ladite direction de mesure (x) avec une période prédéterminée, les éléments topographiques (11) d'une période étant identique à ceux de la période précédante et suivante, lesdits seconds moyens étant agencés de façon à évaluer des signaux couplés latéralement des électrodes émettrices (21a, 21b) sur le curseur à l'électrode réceptrice (21c), respectivement aux électrodes réceptrices sur le curseur, les éléments topographiques (11) de la règle étant conformés de façon à influencer lesdits signaux couplés latéralement sur le curseur (20) en modifiant les capacités de couplage (Cac, Cbc) entre lesdites électrodes se trouvent toutes sur le curseur (20) lorsque le curseur (20) et la règle (10) sont déplacés l'un par rapport à l'autre suivant la direction de mesure (x).

2. Capteur capacitif selon la revendication 1, caractérisé en ce que le curseur comporte au moins une série d'électrodes arrangées suivant ladite direction de mesure (x) et des moyens de commutation permettant de relier les électrodes à au moins deux signaux électriques (Va, Vb) suivant un arrangement périodique.

3. Capteur capacitif selon la revendication 1 ou 2, caractérisé en ce que les signaux électriques (Va, Vb) appliquées sur au moins deux électrodes émettrices (21a, 21b) sont des signaux alternatifs (Va, Vb) de même amplitude et fréquence, mais de polarité opposée, les électrodes émettrices étant sensiblement coplanaires avec l'électrode réceptrice (21c), respectivement les électrodes réceptrices.

4. Capteur capacitif selon la revendication 3, caractérisé en ce que la règle (510) comprend au moins une rangée d'éléments topographiques (511) de façon à présenter un relief périodique ayant une période (Tx) le long d'au moins une direction de mesure (x), le curseur (520) comportant au moins une rangée d'électrodes (521) disposées le long de cette direction, les moyens de commutation (525) étant agencés de façon à relier suivant une distribution prédéterminée chaque électrode de cette rangée à l'un des signaux alternatifs (Va, Vb), à l'une des entrées d'un amplificateur (522), ou à un potentiel de masse (Vg) de manière à obtenir une distribution de signaux correspondant à la période (Tx) dudit relief périodique ou à un multiple de cette période (Tx), ces moyens de commutation (525) permettant de déplacer ladite distribution le long de la rangée d'électrodes (521).

5. Capteur capacitif selon la revendication 4, caractérisé en ce que les moyens de commutation (525) sont agencés de façon à obtenir une distribution de signaux comportant au moins une série de signaux comprenant successivement au moins une électrode (521a) reliée à un premier signal alternatif (Va), au moins une électrode (521g) reliée au potentiel de masse (Vg), au moins une électrode (521c) reliée à une première entrée (525c) d'un amplificateur différentiel (522), au moins une électrode (521g) reliée au potentiel de masse (Vg), au moins une électrode (521b) reliée à un second signal alternatif (Vb), au moins une électrode (521g) reliée au potentiel de masse (Vg), au moins une électrode (521d) reliée à la seconde entrée (525d) de l'amplificateur différentiel (522), au moins une électrode (521g) reliée au potentiel de masse (Vg), ladite série de signaux correspondant à une période double du relief périodique de la règle (510).

6. Capteur capacitif selon la revendication 1, caractérisé en ce que le curseur (420) comprend au moins une paire d'électrodes réceptrices (421c, 421d) identiques et coplanaires connectées aux deux entrée d'un amplificateur différentiel (422), les au moins deux électrodes émettrices (421a, 421b) étant disposées plus près de l'une (421c) des électrodes réceptrices.

7. Capteur capacitif selon la revendication 6, caractérisé en ce que pour chaque groupe d'électrodes émettrices (421a, 421b) disposées plus près de l'une (421c) des électrodes réceptrices, le curseur

# EP 0 538 184 B1

(420) comprend un autre groupe d'électrodes émettrices (421a', 421b') identiques mais disposées plus près de l'autre (421d) des électrodes réceptrices, les électrodes émettrices (421a, 421b'; 421b, 421a') situées en regard des deux côtés des deux électrodes réceptrices (421c, 421d) étant alimentées en signaux alternatifs de même amplitude et fréquence, mais de polarités opposées, ledit élément topographique (411) étant conformé et disposé sur la règle (420) de façon à modifier par son déplacement les capacités de couplage entre les électrodes émettrices et réceptrices et à obtenir des signaux différentiels aux deux entrées de l'amplicateur différentiel (422).

8. Capteur capacitif selon les revendications 3 et 7, caractérisé en ce que le curseur (620) comprend deux rangées d'électrodes émettrices (621) identiques alignées suivant une direction de mesure (x) et des électrodes réceptrices (621c, 621d) disposées parallèlement à chacune desdites rangées d'électrodes émettrices, les moyens de commutation (629) étant agencés de façon à appliquer aux électrodes émettrices (621) des deux rangées des distributions de signaux pareilles l'une à l'autre mais avec des polarités opposées, ces moyens de commutation (629) permettant de déplacer les distributions de signaux le long des rangées, chacune des électrodes réceptrices (621c, 621d) étant connectée à une entrée (622c, 622d) d'un amplificateur différentiel (622).

9. Capteur capacitif selon la revendication 8, caractérisé en ce que l'amplificateur différentiel (622) est connecté à un comparateur (623) pour convertir le signal amplifié en un signal digital qui est démodulé dans un démodulateur (624) dont le signal de sortie commande le sens de comptage d'un compteur-décompteur (628) qui est connecté a un décodeur (629) générant, après le passage dans un modulateur (630), la distribution des signaux des deux rangées d'électrodes émettrices (621).

10. Capteur capacitif selon la revendication 1, caractérisé en ce que la règle (310) comprend au moins un élément topographique (311) en creux ou relief de forme circulaire, le curseur (320) présentant au moins un motif d'électrodes formant des anneaux concentriques et comportant au moins une électrode réceptrice annulaire (321c) disposée entre des électrodes émettrices (321a, 321b) reliées à l'un ou l'autre des deux signaux alternatifs (Va, Vb).

11. Capteur capacitif selon l'une des revendications 1, 6, 7 ou 10, caractérisé en ce que la règle (10) comprend une série d'éléments topographiques (11) arrangés suivant une première direction avec un pas prédéterminé, le curseur (20) comportant une série d'ensembles d'électrodes arrangés suivant la même direction, mais avec un pas légèrement différent afin d'obtenir un effet de "vernier".

12. Capteur capacitif selon la revendication 11, caractérisé en ce que la série d'éléments topographiques (11) de la règle (10) sont aussi arrangés périodiquement suivant une seconde direction avec un pas prédéterminé, et que la série d'ensembles d'électrodes du curseur (20) sont aussi arrangés périodiquement suivant la seconde direction, mais avec un pas légèrement différent afin d'obtenir un effet de "vernier" suivant deux directions de mesure.

13. Capteur selon l'une des revendications 1 à 9, caractérisé en ce que la règle (910a) comprend des éléments topographiques (911a) en creux ou en élévation formant deux reliefs périodiques suivant une première et seconde direction de mesure orthogonale.

14. Capteur selon la revendication 13, caractérisé en ce que le curseur comprend un réseau à deux dimensions d'électrodes formant une grille dont alternativement les lignes d'électrodes parallèles à la première direction, puis les colonnes d'électrodes parallèles à la seconde direction sont reliées auxdits premier et second moyens.

15. Capteur selon la revendication 13, caractérisé en ce que le curseur (938a, 939b) comprend deux senseurs (920a, 920b) présentant des arrangements d'électrodes susceptibles de déterminer la position relative du curseur et de la règle suivant la première et seconde direction orthogonale.

16. Capteur selon la revendication 13, caractérisé en ce que la règle est constituée par une plaque (911b) diélectrique comportant une surface supérieure lisse et un réseau bidimensionnel de cavités sous cette surface supérieure.

13

EP 0 538 184 B1

**17.** Capteur capacitif selon l'une des revendications 1 à 11, caractérisé en ce que la règle est constituée soit par une tige cylindrique (810b) munie d'une crémaillère (811b), soit par un pignon (810c), soit par un disque tournant (810d) comportant des éléments topographiques (811d) en élévation ou en creux, soit par une vis micrométrique (811c).

**18.** Capteur capacitif selon l'une des revendications 1, 2, 10, 11 ou 13, caractérisé en ce que la règle (810) comprend des éléments topographiques (811) en creux ou en élévation recouverts par un matériau (812) présentant une surface lisse en regard du curseur, ce matériau formant une couche sur les éléments topographiques (811) de façon à remplir ou ne pas remplir les éléments topographiques (811) en creux.

**19.** Capteur selon l'une des revendications 1 à 18, caractérisé en ce que le curseur (720a) est constitué par un circuit intégré comportant les électrodes émettrices et réceptrices.

**20.** Capteur selon l'une des revendications 1 à 11, caractérisé en ce que le plan des électrodes (721c) du curseur (720c) est perpendiculaire au plan de la règle (710c) présentant les éléments topographiques en creux ou en élévation.

**21.** Capteur selon l'une des revendications 4 ou 8, caractérisé en ce que les moyens de commutation (525, 629) sont agencés de façon que la distribution des signaux sur le réseau d'électrodes est déplacée de manière à suivre le déplacement relatif entre la règle (510, 610) et le curseur (520, 620).

**22.** Capteur selon l'une des revendications 4 ou 8, caractérisé en ce que les moyens de commutation (525, 629) sont agencés de façon que la distribution des signaux sur le réseau d'électrodes est déplacée en continu afin d'avoir un balayage à vitesse constante, la postion relative du curseur (520, 620) par rapport à la règle (510, 610) étant obtenue par une méthode de zéro ou de phase.

**Claims**

**1.** Capacitive position sensor comprising a cursor (20) and a scale (10) separated from each other by a predetermined distance (H) and displaceable relative to each other along at least one measuring direction (x), the cursor comprising at least two transmitting electrodes (21a, 21b) and at least one receiving electrode (21c) and first means (629) for generating electrical signals applied to the transmitting electrodes and second means (623, 624) for evaluating the signals picked up by the receiving electrodes so as to determine the relative position of the cursor (20) relative to the scale (10), characterized in that the scale (10) comprises a periodical relief constituted by a material which is dielectric or conductive from one end to the other end of this periodical relief and presenting topographical features (11) in the form of depressions or elevation arrayed along at least said measuring direction (x) with a predetermined period, the topographical features (11) of one period being identical to those of the preceeding and following period, said second means being adapted to evaluate the signals coupled laterally from the transmitting electrodes (21a, 21b) on the cursor to the receiving electrode (21c), respectively to the receiving electrodes on the cursor, the topographical features (11) of the scale being conformed so as to influence said signals coupled laterally on the cursor (20) by modifying the coupling capacitances (Cac, Cbc) between said electrodes located all on the cursor when the cursor (20) and the scale (10) are displaced relative to each other along the measuring direction (x).

**2.** Capacitive sensor according to claim 1, characterized in that the cursor comprises at least one electrode array extending along said measuring direction (x) and switching means for connecting the electrodes to at least two electrical signals (Va, Vb) in a periodic distribution.

**3.** Capacitive sensor according to claim 1 or 2, characterized in that electrical signals (Va, Vb) applied to at least two transmitting electrodes (21a, 21b) are a.c. signals (Va, Vb) of same amplitude and frequency, but of opposite polarity, the transmitting electrodes being substantially coplanar with the receiving electrode (21c), respectively the receiving electrodes.

**4.** Capacitive sensor according to claim 3, characterized in that the scale (510) comprises at least one array of topographical features (511) in order to form a periodic relief having a period (Tx) along at least one measuring direction (x), the cursor (520) comprising at least one row of electrodes (521) extending

14

along said direction, the switching means (525) being adapted to connect each electrode of said row according to a predetermined distribution to one of the a.c. signals (Va, Vb), to one of the inputs of an amplifier (522), or to a shielding potential (Vg) in order to obtain a signal distribution corresponding to the period (Tx) of said periodic relief or to a multiple of said period (Tx), said switching means (525) allowing to displace said distribution along said electrode row (521).

5. Capacitive sensor according to claim 4, characterized in that the switching means (525) are adapted to obtain a signal distribution comprising at least one signal sequence comprising successively at least one electrode (521a) connected to a first a.c. signal (Va), at least one electrode (521g) connected to the shielding potential (Vg), at least one electrode (521c) connected to a first input (525c) of a differential amplifier (522), at least one electrode (521g) connected to the shielding potential (Vg), at least one electrode (521b) connected to a second a.c. signal (Vb), at least one electrode (521g) connected to the shielding potential (Vg), at least one electrode (521d) connected to a second input (525d) of said differential amplifier (522), at least one electrode (521g) connected to the shielding potential (Vg), said signal sequence corresponding to a double period of the periodic relief of the scale (510).

6. Capacitive sensor according to claim 1, characterized in that the cursor (420) comprises at least one pair of identical and coplanar receiving electrodes (421c, 421d) connected to both inputs of a differential amplifier (422), said at least two transmitting electrodes (421a, 421b) being located nearer to one (421c) of the receiving electrodes.

7. Capacitive sensor according to claim 6, characterized in that for each pair of transmitting electrodes (421a, 421b) located nearer to one (421c) of the receiving electrodes, the cursor (420) comprises another group of identical transmitting electrodes (421a', 421b') but located nearer to the other (421d) receiving electrode, the transmitting electrodes (421a, 421b'; 421b, 421a') facing both sides of the two receiving electrodes (421c, 421d) being tied to a.c. signals of same amplitude and frequency, but of opposite polarity, said topographical feature (411) being shaped and located on the scale (410) so as to modify by its displacement the coupling capacitances between the transmitting and the receiving electrodes and to obtain differential signals between both inputs of the differential amplifier (422).

8. Capacitive sensor according to claims 3 and 7, characterized in that the cursor (620) comprises two rows of identical transmitting electrodes (621) aligned along a measuring direction (x) and receiving electrodes (621c, 621d) extending parallely to each of said rows of transmitting electrodes, the switching means (629) being adapted to provide the transmitting electrodes (621) of the two rows with signal distributions which are identical to each other, but of opposite polarity, said switching means (629) allowing to displace the signal distributions along the rows, each of the receiving electrodes (621c, 621d) being connected to one input (622c, 622d) of a differential amplifier (622).

9. Capacitive sensor according to claim 8, characterized in that the differential amplifier (622) is connected to a comparator (623) for converting the amplified signal into a digital signal, which is demodulated in a demodulator (624) whose output signal controls the counting direction of an up-down counter (628) which is connected to a decoder (629) generating after the passage in a modulator (630) the signal distribution of the two rows of transmitting electrodes (621).

10. Capacitive sensor according to claim 1, characterized in that the scale (310) comprises at least one topographical feature (311) in the form of a depression or an elevation of annular shape, the cursor (320) having at least one pattern of electrodes forming concentric rings and comprising at least one annular receiving electrode (321c) located between transmitting electrodes (321a, 321b) connected to one or the other of the two a.c. signals (Va, Vb).

11. Capacitive sensor according to one of the claims 1, 6, 7 or 10, characterized in that the scale (10) comprises a sequence of topographical features (11) arrayed with a given pitch along a first direction, the cursor (20) comprising a sequence of groups of electrodes (20) arrayed along the same direction, but with a slightly different pitch so as to produce a "vernier" effect.

12. Capacitive sensor according to claim 11, characterized in that the sequence of topographical features (11) of the scale (10) are also periodically arrayed with a given pitch along a second direction and the sequence of groups of electrodes on the cursor (20) are also periodically arrayed along the second direction but with a slightly different pitch so as to produce a "vernier" effect along two measuring directions.

13. Sensor according to one of the claims 1 to 9, characterized in that the scale (910a) comprises topographical features (911a) in the form of depressions or elevations forming two periodic reliefs according to a first and a second perpendicular measuring direction.

14. Sensor according to claim 13, characterized in that the cursor comprises a two-dimensional array of electrodes forming a grid, of which alternatively the rows of electrodes parallel to the first direction, then the columns of electrodes parallel to the second direction are connected to said first and second means.

15. Sensor according to claim 13, characterized in that the cursor (938a, 939b) comprises two sensors (920a, 920b) including electrode arrangements, which allow to determine the relative position between the cursor and the scale along the first and second perpendicular measuring direction.

16. Sensor according to claim 13, characterized in that the scale consists of a dielectric plate (911b) having a smooth upper surface and a two dimensional array of cavities under this upper surface.

17. Capacitive sensor according to one of the claims 1 to 11, characterized in that the scale consists of a cylindrical rod (810b) provided with a rack (811b), of a pinion (810c), of a rotating disk (810d) having topographical features (811d) forming elevations or depressions, or of a micrometer screw (811c).

18. Capacitive sensor according to one of the claims 1, 2, 10, 11 or 13, characterized in that the scale (810) comprises topographical features (811) forming depressions or elevations covered by a material (812) presenting a smooth surface facing the cursor, this material forming a coating over the topographical features (811) in order to fill or not to fill the topographical features (811) forming depressions.

19. Capacitive sensor according to one of the claims 1 to 18, characterized in that the cursor (720a) consists of an integrated circuit comprising the transmitting and receiving electrodes.

20. Capacitive sensor according to one of the claims 1 to 11, characterized in that the electrode plane (721c) of the cursor (720c) is perpendicular to the scale (710c) plane provided with the topographical features forming depressions or elevations.

21. Capacitive sensor according to one of the claims 4 or 8, characterized in that the switching means (525, 629) are adapted in such a manner as to move the signal distribution on the electrode array so as to track the relative displacement between the scale (510, 610) and the cursor (520, 620).

22. Capacitive sensor according to one of the claims 4 or 8, characterized in that the switching means (525, 629) are adapted to continuously displace the signal distribution on the electrode array so as to result in a constant speed scan, the relative position of the cursor (520, 620) with respect to the scale (510, 610) being obtained by a zero or phase method.

**Patentansprüche**

1. Kapazitiver Positionsfühler mit einem Läufer (20) und einer Messschiene (10), die voneinander einen vorbestimmten Abstand (H) haben und gegeneinander in zumindest einer Messrichtung (x) zu verschieben sind, wobei der Läufer zumindest zwei Sendeelektroden (21a, 21b) und zumindest eine Empfangselektrode (21c) sowie erste Organe (629) zur Erzeugung der an die Sendeelektroden angelegten elektrischen Signale und zweite Organe (623, 624) zur Auswertung der durch die Empfangselektrode empfangenen Signale hat, damit die Position des Läufers (20) relativ zur Messschiene (10) bestimmt werden kann, dadurch gekennzeichnet, dass die Messschiene (10) ein periodisches Relief aufweist, das über seine gesamte Länge aus einem dielektrischen oder einem leitenden Material besteht und topographische Elemente (11) in der Form von Vertiefungen oder Erhöhungen hat, die zumindest entlang der benannten Messrichtung (x) mit vorbestimmter Periode angeordnet sind, wobei die topographischen Elemente (11) einer Periode mit denen der vorangehenden und der folgenden Periode identisch sind und die benannten zweiten Organe so eingerichtet sind, dass seitlich gekoppelte Signale von den Sendeelektroden (21a, 21b) auf dem Läufer mit der Empfangselektrode (21c) bzw. mit den Empfangselektroden auf dem Läufer ausgewertet werden, wobei die topographischen Elemente (11) der Messschiene so gestaltet sind, dass sie die benannten seitlich gekoppelten Signale auf dem Läufer (20) durch Abänderung der Kopplungskapazitäten (Cac, Cbc) zwischen den benannten, alle auf dem Läufer (20) befindlichen Elektroden beeinflussen, während der Läufer (20) und die Messschiene (10) entsprechend der Messrichtung (x) gegeneinander verschoben werden.

2. Kapazitiver Fühler gemäss Anspruch 1, dadurch gekennzeichnet, dass der Läufer zumindest eine Reihe von Elektroden, die in der benannten Messrichtung (x) angeordnet sind, sowie Kommutationsorgane aufweist, die es gestatten, die Elektroden mit zumindest zwei elektrischen Signalen (Va, Vb) in einer periodischen Anordnung zu verbinden.

3. Kapazitiver Fühler gemäss Anspruch 1 oder 2, dadurch gekennzeichnet, dass die elektrischen Signale (Va, Vb), die an zumindest zwei Sendeelektroden (21a, 21b) angelegt werden, Wechselsignale (Va, Vb) derselben Amplitude und Frequenz, aber entgegengesetzter Polarität sind, wobei die Sendeelektroden mit der Empfangselektrode (21c) bzw. den Empfangselektroden im wesentlichen koplanar sind.

4. Kapazitiver Fühler gemäss Anspruch 3, dadurch gekennzeichnet, dass die Messschiene (510) zumindest eine Reihe topographischer Elemente (511) aufweist und dadurch ein periodisches Relief mit einer Periode (Tx) entlang zumindest einer Messrichtung (x) aufweist, wobei der Läufer (520) zumindest eine Reihe von Elektroden (521) aufweist, die in dieser Richtung angeordnet sind, und die Kommutationsorgane (525) so eingerichtet sind, dass sie gemäss einer vorbestimmten Verteilung jede Elektrode dieser Reihe mit einem der Wechselsignale (Va, Vb), einem der Eingänge eines Verstärkers (522) oder einem Massepotential (Vg) verbinden, so dass eine der Periode (Tx) des benannten periodischen Reliefs oder einem Vielfachen dieser Periode (Tx) entsprechende Signalverteilung erhalten wird, wobei es die Kommutationsorgane (525) gestatten, die benannte Verteilung entlang der Elektrodenreihe (521) zu verschieben.

5. Kapazitiver Fühler gemäss Anspruch 4, dadurch gekennzeichnet, dass die Kommutationsorgane (525) dafür eingerichtet sind, dass eine Signalverteilung erhalten wird, in der zumindest eine Signalreihe enthalten ist, bei der in der Reihenfolge zumindest eine Elektrode (521a) mit einem ersten Wechselsignal (Va), zumindest eine Elektrode (521g) mit einem Massepotential (Vg), zumindest eine Elektrode (521c) mit einem ersten Eingang (525c) eines Differentialverstärkers (522), zumindest eine Elektrode (525g) mit dem Massepotential (Vg), zumindest eine Elektrode (521b) mit einem zweiten Wechselsignal (Vb), zumindest eine Elektrode (521g) mit dem Massepotential (Vg), zumindest eine Elektrode (521d) mit dem zweiten Eingang (525d) des Differentialverstärkers (522) und zumindest eine Elektrode (521g) mit dem Massepotential (Vg) verbunden wird und die benannte Signalreihe einer doppelten Periode des periodischen Reliefs der Messschiene (510) entspricht.

6. Kapazitiver Fühler gemäss Anspruch 1, dadurch gekennzeichnet, dass der Läufer (420) zumindest ein Paar identischer, koplanarer Empfangselektroden (421c, 421d) aufweist, die an die beiden Eingänge eines Differentialverstärkers (422) angeschlossen sind, wobei die wenigstens zwei Sendeelektroden (421a, 421b) näher an einer (421c) der Empfangselektroden angeordnet sind.

7. Kapazitiver Fühler gemäss Anspruch 6, dadurch gekennzeichnet, dass der Läufer (420) für jede Gruppe von Sendeelektroden (421a, 421b), die näher an einer (421c) der Empfangselektroden angeordnet sind, eine weitere Gruppe von identischen Sendeelektroden (421a', 421b') aufweist, die näher an der anderen (421d) Empfangselektrode angeordnet sind, wobei die Sendeelektroden (421a, 421b'; 421b, 421a'), die den beiden Seiten der beiden Empfangselektroden (421c, 421d) gegenüberliegen, mit Wechselsignalen derselben Amplitude und Frequenz, aber umgekehrter Polarität versorgt werden und das benannte topographische Element (411) so gestaltet und auf der Messschiene (420) angeordnet ist, dass es durch seine Verschiebung die Kopplungskapazitäten zwischen den Sende- und Empfangselektroden verändert und differentielle Signale an den beiden Eingängen des Differentialverstärkers (422) erhalten werden.

8. Kapazitiver Fühler gemäss Ansprüchen 3 und 7, dadurch gekennzeichnet, dass der Läufer (620) zwei Reihen identischer Sendeelektroden (621), die in einer Messrichtung (x) ausgerichtet sind, sowie Empfangselektroden (621c, 621d) aufweist, die parallel zu jeder der benannten Reihen von Sendeelektroden angeordnet sind, wobei die Kommutationsorgane (629) so eingerichtet sind, dass an die Sendeelektroden (621) der beiden Reihen Signalverteilungen angelegt werden, die einander gleichen, aber umgekehrte Polaritäten haben, und es die Kommutationsorgane (629) gestatten, die Signalverteilungen entlang der Reihen zu verschieben, wobei jede der Empfangselektroden (621c, 621d) an einen Eingang (622c, 622d) eines Differentialverstärkers (622) angeschlossen ist.

9. Kapazitiver Fühler gemäss Anspruch 8, dadurch gekennzeichnet, dass der Differentialverstärker (622) mit einem Komparator (623) verbunden ist, um das verstärkte Signal in ein digitales Signal umzuwandeln, das in einem Demodulator (624) demoduliert wird, wobei das Ausgangssignal des Demodulators die Zählrichtung eines Aufwärts- und Abwärtszählers (628) steuert, der an einen Dekoder (629) angeschlossen ist, der nach Durchgang durch einen Modulator (630) die Signalverteilung der beiden Reihen von Sendeelektroden (621) erzeugt.

10. Kapazitiver Fühler gemäss Anspruch 1, dadurch gekennzeichnet, dass die Messschiene (310) zumindest ein topographisches Element (311) in Form einer kreisrunden Vertiefung oder Erhöhung enthält und der Läufer (320) zumindest einen Satz von Elektroden, die konzentrische Ringe bilden, sowie zumindest eine ringförmige Empfangselektrode (321c) aufweist, die zwischen den mit dem einen oder anderen der beiden Wechselsignale (Va, Vb) verbundenen Sendeelektroden (321a, 321b) angeordnet ist.

11. Kapazitiver Fühler gemäss einem der Ansprüche 1, 6, 7 oder 10, dadurch gekennzeichnet, dass die Messschiene (10) eine Reihe von topographischen Elementen (11) enthält, die mit einer vorbestimmten Schrittlänge in einer ersten Richtung angeordnet sind, wobei Läufer (20) eine Reihe von Elektrodengruppen enthält, die entlang derselben Richtung angeordnet sind, jedoch mit einer geringfügig unterschiedlichen Schrittlänge, um einen Noniuseffekt zu erhalten.

12. Kapazitiver Fühler gemäss Anspruch 11, dadurch gekennzeichnet, dass die Reihe von topographischen Elementen (11) der Messschiene (10) auch in einer zweiten Richtung mit einer vorbestimmten Schrittlänge periodisch angeordnet ist und dass die Reihe von Elektrodengruppen des Läufers (20) ebenfalls in einer zweiten Richtung periodisch angeordnet ist, jedoch mit einer geringfügig unterschiedlichen Schrittlänge, um einen Noniuseffekt in zwei Messrichtungen zu erhalten.

13. Fühler gemäss einem der Ansprüche 1 bis 9, dadurch gekennzeichnet, dass die Messschiene (910a) vertiefte oder erhabene topographische Elemente (911a) aufweist, die in einer ersten und zweiten, dazu orthogonalen Messrichtung periodische Reliefs bilden.

14. Fühler gemäss Anspruch 13, dadurch gekennzeichnet, dass der Läufer ein zweidimensionales Netz von Elektroden enthält, die ein Gitter bilden, von dem wechselweise die Zeilen von Elektroden, die zu einer ersten Richtung parallel sind, sodann die Kolonnen von Elektroden, die zu einer zweiten Richtung parallel sind, mit den benannten ersten und zweiten Organen verbunden werden.

15. Fühler gemäss Anspruch 13, dadurch gekennzeichnet, dass der Läufer (938a, 939b) zwei Sensoren (920a, 920b) enthält, die Elektrodenanordnungen aufweisen, mit denen die Position des Läufers relativ zur Messschiene in einer ersten und zweiten, dazu orthogonalen Richtung bestimmt werden kann.

16. Fühler gemäss Anspruch 13, dadurch gekennzeichnet, dass die Messschiene aus einer dielektrischen Platte (911b) besteht, deren Oberseite eine glatte Oberfläche und unter dieser Oberfläche ein zweidimensionales Netz von Hohlräumen aufweist.

17. Kapazitiver Fühler gemäss einem der Ansprüche 1 bis 11, dadurch gekennzeichnet, dass die Messschiene entweder aus einem zylindrischen Schaft (810b) mit Zahnstange (811b), einem Zahnrad (810c), einer sich drehenden Scheibe (810d) mit erhabenen oder vertieften topographischen Elementen (811d) oder einer Mikrometerschraube (811c) besteht.

18. Kapazitiver Fühler gemäss einem der Ansprüche 1, 2, 10, 11 oder 13, dadurch gekennzeichnet, dass die Messschiene (810) vertiefte oder erhabene topographische Elemente (811) enthält, die durch ein Material (812) überdeckt werden, das dem Läufer eine glatte Oberfläche darbietet, wobei dieses Material eine Schicht auf den topographischen Elementen (811) bildet, die die vertieften topographischen Elemente (811) entweder ausfüllt oder nicht ausfüllt.

19. Fühler gemäss einem der Ansprüche 1 bis 18, dadurch gekennzeichnet, dass der Läufer (720a) durch eine integrierte Schaltung gebildet wird, die die Sende- und Empfangselektroden enthält.

20. Fühler gemäss einem der Ansprüche 1 bis 11, dadurch gekennzeichnet, dass die Ebene der Elektroden (721c) des Läufers (720c) senkrecht zur Ebene der Messschiene (710c) steht, die die topographischen Elemente als Vertiefungen oder Erhöhungen aufweist.

21. Fühler gemäss einem der Ansprüche 4 oder 8, dadurch gekennzeichnet, dass die Kommutationsorgane (525, 629) so eingerichtet sind, dass die Signalverteilung über das Elektrodennetz in einer Weise verschoben wird, dass sie der Verschiebung der Messschiene (510, 610) relativ zum Läufer (520, 620) folgt.

22. Fühler gemäss einem der Ansprüche 4 oder 8, dadurch gekennzeichnet, dass die Kommutationsorgane (525, 629) so eingerichtet sind, dass die Signalverteilung über das Elektrodennetz kontinuierlich so verschoben wird, dass ein Vorschub mit konstanter Geschwindigkeit erfolgt, wobei die Position des Läufers (520, 620) relativ zur Messschiene (510, 610) durch eine Null- oder Phasenmethode erhalten wird.

## FIG.1

## FIG.2a

## FIG.2b

## FIG.3a

## FIG.3b

# FIG.4

# FIG.5

# FIG.6

EP 0 538 184 B1

# FIG.7a

731a

732a

734a

710a

721a

720a

733a

# FIG.7b

710b          721b

737b                                    737b

736b    735b        720b          735b    736b

# FIG.7c

720c

721c

710c

FIG.8a

FIG.8b

FIG.8c

FIG.8d

FIG.8e

# FIG.9a

# FIG.9b